# EUROPEAN PATENT SPECIFICATION

(11) **EP 2 070 678 B1**
(45) Date of publication and mention of the grant of the patent: **15.02.2017**
(21) Application number: 07807832.6
(22) Date of filing: 25.09.2007
(51) Int. Cl.: B29C 43/10, B29C 43/28, B29C 43/56, B29K 105/08

(54) **PROCESS FOR THE PRODUCTION OF PREFORMS AND FIBER-REINFORCED PLASTICS WITH THE MOLD**
VERFAHREN ZUR HERSTELLUNG VON VORFORMEN UND FASERVERSTÄRKTEN KUNSTSTOFFEN MIT DER FORM
PROCÉDÉ DE FABRICATION DE PRÉFORMES ET DE MATÉRIAUX PLASTIQUES RENFORCÉS DE FIBRES AVEC LE MOULE

(30) Priority: 29.09.2006 JP 2006267464
(43) Date of publication of application: 17.06.2009
(73) Proprietor: Toray Industries, Inc., Tokyo, 103-8666 (JP)
(72) Inventor: SHINODA, Tomoyuki, Iyo-gun Ehime 791-3193 (JP); ASAHARA, Nobuo, Iyo-gun Ehime 791-3193 (JP); YAMAMOTO, Kohnosuke, Iyo-gun Ehime 791-3193 (JP)
(74) Representative: Hoefer & Partner Patentanwälte mbB
(86) International application number: PCT/JP2007/068560
(87) International publication number: WO 2008/041556

(56) References cited:
- EP-A1- 0 584 017
- WO-A1-2005/082606
- JP-A- 2005 288 785
- JP-A- 2007 118 598
- JP-A- 2007 260 925
- JP-U- 03 039 513
- US-A- 3 128 322
- CAMPBELL F C ED - CAMPBELL FLAKE C: "Manufacturing processes for advanced composites", 1 January 2004 (2004-01-01), MANUFACTURING PROCESSES FOR ADVANCED COMPOSITES, ELSEVIER ADVANCED TECHNOLOGY, OXFORD, GB, PAGE(S) 304 - 356, XP002580602, ISBN: 978-1-85617-415-2 * paragraph [9.15] * * paragraph [9.19] * * figure 42 *
- MIRACLE & S L DONALDSON D B ED - MIRACLE & S L DONALDSON D B: "Composites, Vacuum Infusion", 1 December 2001 (2001-12-01), COMPOSITES, ASM HANDBOOK, USA, PAGE(S) 501 - 511, XP002619563, ISBN: 978-0-87170-703-1 * pages 501,502 * * pages 506,509 * * pages 510,513 * * figure 23 *

## Description

### TECHNICAL FIELD

The present invention relates to the use of a forming-molding tool in the production of fiber reinforced plastics by the resin transfer molding process (may be abbreviated hereinafter as the RTM process). In particular, the present invention concerns a process for producing a preform and fiber reinforced plastics by using the forming-molding tool. More specifically, the present invention relates to the use of a forming-molding tool for resin transfer molding such that a preform and fiber reinforced plastics may be produced by running a heating medium into piping placed and integrated with the forming-molding tool to heat the forming-molding tool and thereby heat a reinforcing fiber base material and a matrix resin as a material for fiber reinforced plastics without using an oven. Accordingly, the present invention relates to a process for producing a preform and fiber reinforced plastics by using the forming-molding tool.

### BACKGROUND ART

There is demand for the structural materials constituting transport equipment such as aircraft to satisfy certain mechanical characteristics, as well as to be lighter in weight and lower in cost. Among these, the structural materials in aircraft is greatly expected to be lighter in weight, and the shift to fiber reinforced plastics (may be abbreviated hereinafter as the FRPs) as the primary structural materials of components such as wings, the tailplane and the fuselage is being investigated in order to achieve mechanical characteristics and reduced weight.

An autoclave molding process is known as a typical production process for such FRPs. In autoclave molding, a pre-preg is used as FRP material, the pre-preg being reinforcing fibers impregnated with a matrix resin in advance. By inserting the pre-preg into a molding tool in the shape of the component and then laminating, thereafter heating and applying pressure to predetermined temperature and pressure with an autoclave, an FRP is formed. The pre-preg used herein may be controlled the reinforcing fiber volume fraction Vf to a high degree. This has the advantage of enabling an FRP with excellent mechanical characteristics to be obtained. However, the pre-preg itself is an expensive material, and autoclave equipment is very expensive. Thus, the pre-preg is also problematic in that molding cost is high. In particular, the structural materials for aircraft are so large in component size that an autoclave to be used increases in size and equipment cost becomes high above all.

Meanwhile, resin injection molding processes such as resin transfer molding process (may be abbreviated hereinafter as the RTM: Resin Transfer Molding) are known to be molding processes that can reduce molding cost.

The resin transfer molding process is a molding process for the FRPs characterized in that a laminate (abbreviated hereinafter as the preform) such that a reinforcing fiber base material that has not been impregnated with a matrix resin is arranged for a shape to be molded is placed inside a molding tool, and then the matrix resin is pressurized, injected and impregnated into the preform to cure the matrix resin by using an oven.

Thus, the resin transfer molding process has the advantage that material cost may be reduced by reason of using a dry reinforcing fiber base material that has not been impregnated with a matrix resin, and furthermore the advantage that molding cost may be reduced by reason of not using an autoclave.

Above all, a resin transfer molding process for injecting a matrix resin by utilizing vacuum pressure (VaRTM: Vacuum Assisted Resin Transfer Molding) is known as a molding process that can reduce molding cost greatly by reason of molding with simple equipment.

Here, in this VaRTM process, since pressurization except with vacuum pressure is not performed, grades such as thickness and shape of a molded product depend greatly on the grade of a preform. Thus, it is extremely important to produce a high-grade preform.

A process for producing a preform in such a manner that a laminate sheet made of a plurality of layers of reinforcing fiber base materials for which an adhesive material for interlaminar bonding is provided is placed on a forming plate.of a downside tool having the forming plane, and then a upside forming plate having a forming plane corresponding to the forming plate of the downside tool is sequentially embossed on each small region of the laminate sheet, and thereby a predetermined preform shape is formed on the laminate sheet, and thereafter the laminate sheet is heated by heated air or a silicon rubber heater to perform interlaminar bonding of the lamination is proposed as a process for producing a preform for resin transfer molding (for example, refer to Patent Document 1).

However, according to the above-mentioned proposal, the heating of the laminate sheet by heated air requires an oven. The oven is inexpensive as compared with an autoclave and is yet problematic in that molding cost becomes high for the reason that a large-sized oven for accommodating the materials is required in the case of molding the structural materials for aircraft and a forming tool needs to be moved to the oven in the step of heating. In addition, some shapes of a molded product bring the places against which hot air of the oven blows well and blows less, so that there is a problem that heating unevenness is caused. Meanwhile, a process for heating by a silicon rubber heater is also described, but a process for placing the silicon rubber heater is not described at all. In the case of heating large-sized components such as structural materials for aircraft, there is a problem that a silicon rubber needs to be disposed in very large area, and heating unevenness is caused between the spots in which the silicon rubber contacts with a metal mold and the spots in which the silicon rubber does not contact therewith to cause a defect in a molded product.

A process for maintaining the shape provided for reinforcing fiber in such a manner that a reinforcing fiber base material with resin provided on the surface is laminated, disposed on a forming tool and covered with a sheet, and pressure is applied thereon to transform the reinforcing fiber into a predetermined shape and melt and harden the resin by a heating mechanism provided for the tool is also proposed as a process for producing a preform for resin transfer molding (for example, refer to Patent Document 2).

However, the above-mentioned proposal describes only a heater with regard to the heating mechanism and as described above, there is a problem that heating unevenness is caused particularly in the case of heating large-sized components such as structural materials for aircraft. In Fig. 1 of Patent Document 2, a heat source is shown inside the forming tool, and thus the placement of the heat source inside the solid forming tool causes most of heat quantity by the heat source to be taken by the tool itself. Thus, there is a problem that temperature unevenness is caused, a reinforcing fiber base material is not efficiently heated and the tool becomes heavy. Such a problem in heating affects shape stability and physical properties such as thickness of a preform. In particular, as described in Patent Documents 1 and 2, when a laminate sheet softened by heating a tackifier existing between laminated layers is pressurized by metal mold pressing or atmospheric pressure by vacuum bag to bond the adhesive material to a reinforcing fiber base material, shape stability of a preform is affected. Since the pressurization is performed in a state such that the tackifier is softened by heating, the tackifier is transformed so thinly that the thickness of a preform is also affected.

Then, in a resin transfer molding process, the thickness of a preform is an extremely important controlled parameter by reason of affecting not merely geometry but also impregnating ability of matrix resin. That is, when heating and pressurized conditions are excessive and the thickness of a preform is thinned too much, there is a possibility of causing a problem that the density of reinforcing fiber in a preform becomes too high and resistance in flow channel of matrix resin is increased and the matrix resin is not impregnated. On the contrary, when heating and pressurized conditions are insufficient and the thickness of a preform is thickened too much, there is a possibility of causing a problem that the density of reinforcing fiber in a preform becomes low and the reinforcing fiber volume fraction (may be abbreviated hereinafter as Vf) becomes low and a predetermined mechanical characteristic is not developed.

Thus, heating unevenness causes dispersion of quality in regions of a preform, and so a process for heating a laminate sheet of a reinforcing fiber base material is extremely important in the production of a preform being used for resin transfer molding.

Then, a preform thus produced is disposed in a molding tool different from the forming tool and subsidiary materials for infusing and bleeding of matrix resin are disposed as required, and then matrix resin is infused and impregnated into a preform in a state such that a preform is sealed by mold pressing or vacuum bag to heat and cure matrix resin with an oven.

In infusing and impregnating matrix resin, a preform disposed in a molding tool and matrix resin are heated in a temperature range in which viscosity increase of matrix resin by curing reaction causes no problems, so that viscosity of matrix resin is decreased and impregnating ability is improved. After matrix resin is completely impregnated into a preform, matrix resin needs to be cured by heating to curing temperature of matrix resin.

Thus, it is necessary that a molding tool is prepared separately from a forming tool and the molding tool with a preform disposed is moved to heating equipment such as an oven; therefore, there is a problem that it takes much time to mold.

In particular, with regard to the structural parts for aircraft, there is a problem that the size of the structural parts is so large that the tool is very heavy and it takes much effort and time to move to heating equipment such as an oven, or equipment such as a tractor is necessary and equipment cost is greatly high.
Patent Document 1: Japanese Unexamined Patent Publication No. 2004-322422
Patent Document 2: Japanese Unexamined Patent Publication No. 2006-123404

EP 0 584 017 A1 discloses a press for forming an object, wherein the press includes a stationary lower platen and a movable upper platen connected to a vertical-movement ram. A former (shaped piece) corresponding to the article to be obtained is placed on the lower platen via a thermally insulating member, the former having channels for the circulation of a heat-exchange fluid. The material to be formed is placed on the shaped piece. The upper platen carries an assembly comprising an elastic membrane, the perimeter of which is held sandwiched between a lower frame and a cover plate connected up to a source of pressurized fluid, the sealing between the said membrane and the cover plate being provided by the clamping pressure between these two components, which results, on the one hand, from the force exerted on the movable platen and, on the other hand, from the pressure of the said fluid.

US 3,128,322 teaches improvements in molding shaped articles and structures from fibrous material impregnated with a curable thermosetting resin binder, which improvements insure freedom from air pockets in the mold structure and also insure substantially uniform distribution of resin binder throughout the molded structure with removal of air and excess of uncured thermosetting resin during molding operation.

CAMPBELL F C ED - CAMPBELL FLAKE C: "Manufacturing processes for advanced composites", 1 January 2004, MANUFACTURING PROCESSES FOR ADVANCED COMPOSITES, ELSEVIER ADVANCED TECHNOLOGY, OXFORD, GB, Pages 304-356, ISBN: 978-1-85617-415-2 is a study on advantages and disadvantages of resin transfer molding processes. Further described are improvements thereof and vacuum-assisted resin transfer molding technologies.

MIRACLE & S DONALDSON D B ED - MIRACLE & S L DONALDSON D B: Composites, Vacuum Infusion", 1 December 2001, COMPOSITES, ASM

HANDBOOK, USA, Pages 501-511, ISBN: 978-0-87170-703-1 describes general aspects of vacuum infusion as a resin injection technique. Described are suitable materials and apparatus designs and advantages and disadvantages of the vacuum infusion over traditional resin transfer molding techniques.

### DISCLOSURE OF THE INVENTION

### PROBLEMS TO BE SOLVED BY THE INVENTION

In view of such problems of prior art, the object of the present invention is to provide a process for producing a preform for resin transfer molding and fiber reinforced plastics by using a forming-molding tool for heating a laminate of a reinforcing fiber base material uniformly and efficiently with high precision.

### MEANS FOR SOLVING THE PROBLEM

The present invention is defined in the appendant claims and adopts one of the following means for solving such problems:
(1) a process for producing a preform characterized in that the preform for resin transfer molding is produced by using a forming-molding tool for vacuum assisted resin transfer molding of fiber reinforced plastics obtained by integrating a face plate part and a flat plate part for forming a hollow convex part, wherein a hole is placed in a region of the flat plate part which is surrounded by the face plate part forming the hollow convex part, and in which metallic piping as a flow path of a heating medium is integrated with the back surface of the face plate part by a thermally conductive material and a rubber cord is integrated with an outside of a region used for forming or molding in the flat plate, wherein the thickness of the face plate part is 1 mm or more and 15 mm or less; wherein
   the diameter of the rubber cord is 10 mm or more and 100 mm or less; and wherein
   a resin inlet and a bleeding port of a matrix resin for resin transfer molding are placed in the flat plate part between the convex part and the rubber cord;
   through the following:
   (A) placing step of placing on the forming-molding tool a laminate of which reinforcing fiber fabrics having thermoplastic and/or thermosetting resin on their surface are laminated;
   (B) forming step of forming the laminate by evacuating an inside of sealed space after the whole laminate is covered with a rubber sheet to seal the forming-molding tool;
      (B1) checking step of checking if the laminate (13) has a defect, such as wrinkle, or not through the rubber sheet while atmospheric pressure is kept applying to the laminate (13) by continuing evacuation; and
   (C) heating and pressurizing step of bonding the reinforcing fiber fabrics through the thermoplastic and/or thermosetting resin on the surface of the reinforcing fiber fabrics by running a heating medium into the piping to heat and pressurize the laminate after being formed;
(2) the process for producing a preform according to (1), in which a subsidiary material as a flow path of a matrix resin in resin transfer molding is placed together with the laminate in the placing step (A);
(3) the process for producing a preform according to (1) or (2), in which the rate of temperature rise of the forming-molding tool is 0.5°C/minute or more and 3°C/minute or less in a heating temperature range of 40°C or more and 130°C or less in the heating and pressurizing step (C);
(4) a process for producing fiber reinforced plastics characterized in that the preform obtained by the process according to any one of (1) to (3) is placed in a molding tool different from the forming-molding tool to infuse, impregnate and cure a matrix resin;
   Further described but not part of the invention is a process for producing fiber reinforced plastics characterized in that resin transfer molding is performed by using the forming-molding tool according to any one of the following
   - a forming-molding tool for resin transfer molding of fiber reinforced plastics obtained by integrating a face plate part and a flat plate part for forming a hollow convex part, in which metallic piping as a flow path of a heating medium is integrated with the back surface of the face plate part by a thermally conductive material and a rubber cord is integrated with an outside of a region used for forming or molding in the flat plate part;
   - the forming-molding tool according to (1), in which the thickness of the face plate part is 1 mm or more and 15 mm or less;
   - the forming-molding tool according to (1) or (2), in which the diameter of the rubber cord is 10 mm or more and 100 mm or less;
   - the forming-molding tool according to any one of (1) to (3), in which a resin inlet and a bleeding port of a matrix resin for resin transfer molding are placed in the flat plate part between the convex part and the rubber cord;
   - the forming-molding tool according to any one of (1) to (4), in which the face plate part is formed by press working;
   through the following:
   (A) placing step of placing on the forming-molding tool a laminate of which reinforcing fiber fabrics having thermoplastic and/or thermosetting resin on their surface are laminated;
   (B) forming step of forming the laminate by evacuating an inside of sealed space after the whole laminate is covered with a rubber sheet to seal the forming-molding tool;
   (C) heating and pressurizing step of bonding the reinforcing fiber fabrics through the thermoplastic and/or thermosetting resin on the surface of the reinforcing fiber fabrics by running a heating medium into a piping to heat and pressurize the laminate after being formed;
   (D) subsidiary material placing step of further placing resin distribution medium and peel ply for infusing and impregnating a matrix resin while the sealing of the rubber sheet is released and obtained preform is kept in the forming-molding tool without being demolded;
   (E) bagging step of evacuating the inside of sealed space after the preform, the resin distribution medium and the peel ply are covered with a bagging film to seal the forming-molding tool;
   (F) resin infusing and impregnating step of infusing a matrix resin while evacuating the inside of the sealed space to impregnate the matrix resin into the preform through the resin distribution medium;
   (G) resin curing step of heating and curing the matrix resin by running a heating medium into the piping; and
   (H) demolding step of demolding a molded product from the forming-molding tool;
   the process for producing fiber reinforced plastics described above, in which a caul plate is placed on the resin distribution medium and the peel ply in the subsidiary material placing step (D);
(5) a process for producing fiber reinforced plastics characterized in that resin transfer molding is performed by using the forming-molding tool for vacuum assisted resin transfer molding of fiber reinforced plastics obtained by integrating a face plate part and a flat plate part for forming a hollow convex part, wherein a hole is placed in a region of the flat plate part which is surrounded by the face plate part forming the hollow convex part, and in which metallic piping as a flow path of a heating medium is integrated with the back surface of the face plate part by a thermally conductive material and a rubber cord is integrated with an outside of a region used for forming or molding in the flat plate part; wherein the thickness of the face plate part is 1 mm or more and 15 mm or less; wherein the diameter of the rubber cord is 10 mm or more and 100 mm or less; and wherein a resin inlet and a bleeding port of a matrix resin for resin transfer molding are placed in the flat plate part between the convex part and the rubber cord;
   through the following:
   (A) placing step of placing on the forming-molding tool resin distribution medium and peel ply as a flow path of a matrix resin in resin transfer molding together with a laminate of which reinforcing fiber fabrics having thermoplastic and/or thermosetting resin on their surface are laminated;
   (B) forming step of forming the laminate by evacuating an inside of sealed space after the whole laminate is covered with a rubber sheet to seal the forming-molding tool;
      (B1) checking step of checking if the laminate (13) has a defect, such as wrinkle, or not through the rubber sheet while atmospheric pressure is kept applying to the laminate (13) by continuing evacuation;
   (C) heating and pressurizing step of bonding the reinforcing fiber fabrics through the thermoplastic and/or thermosetting resin on the surface of the reinforcing fiber fabrics by running a heating medium into a piping to heat and pressurize the laminate after being formed;
   (D) bagging step of evacuating the inside of sealed space after the preform, the resin distribution medium and the peel ply are covered with a bagging film to seal the forming-moulding tool while the sealing of the rubber sheet is released and obtained preform, the resin distribution medium and the peel ply are kept in the forming-molding tool without being demolded;
   (E) resin infusing and impregnating step of infusing a matrix resin while evacuating the inside of the sealed space to impregnate the matrix resin into the preform through the resin distribution medium;
   (F) resin curing step of heating and curing the matrix resin by running a heating medium into the piping; and
   (G) demolding step of demolding a molded product from the forming-molding tool;
(6) the process for producing fiber reinforced plastics according to (5), in which a caul plate) is placed on the resin distribution medium and the peel ply in the bagging step (D) and thereafter the forming-molding tool is sealed with a bagging film; and
(7) the process for producing fiber reinforced plastics according to (5) or (6), in which the rate of temperature rise of the forming-molding tool is 0.5°C/minute or more and 3°C/minute or less in a heating temperature range of 40°C or more and 130°C or less in the heating and pressurizing step (C).

### EFFECT OF THE INVENTION

The forming-molding tool used in the present invention has a heating mechanism capable of heating homogeneously and efficiently with high precision, so that the use of this forming-molding tool may provide a preform for resin transfer molding, which does not require heating equipment such as an oven and offers low cost and high quality, and fiber reinforced plastics using the preform.

### BRIEF DESCRIPTION OF THE DRAWINGS

Fig. 1 is a schematic cross-sectional view of a forming-molding tool used according to an embodiment of the present invention.
Fig. 2 is a schematic top view of a forming-molding tool shown in Fig. 1.
Fig. 3 is a schematic cross-sectional view of a forming molding tool for showing a process for producing a preform for resin transfer molding according to the present invention.
Fig. 4 is a schematic cross-sectional view of a forming-molding tool having a solid convex part produced in Comparative Example 2.
Fig. 5 is a schematic cross-sectional view of a forming molding tool for showing a process for producing fiber reinforced plastics not belonging to the present invention.
Fig. 6 is a schematic cross-sectional view of a forming molding tool for showing a process for producing a preform for resin transfer molding not belonging to the present invention.
Fig. 7 is a view showing the positional relation of a forming-molding tool produced in Comparative Example 1 and hot air.

### REFERENCE NUMERALS

1: forming-molding tool
2: face plate part
3: flat plate part
4: piping as a flow path of a heating medium (for heating a convex part)
5: piping as a flow path of a heating medium (for heating a flat plate part)
6: thermally conductive material
7: rubber cord
8: inlet of a matrix resin
9: bleeding port of a matrix resin
10: heat insulating material
11: hole
12: communicating port to a thermoregulator of piping
13: laminate
14: rubber sheet
15: frame of rubber sheet
16: forming-molding tool having a solid convex part
17: solid convex part
18: piping as a flow path of a heating medium
19: preform
20: resin distribution medium
21: plate
22: bagging film
23: sealant
26: coupler for filling
27: coupler for vacuuming
50: trim line of a product
60: lateral face 60 against which hot air of a convex part blows
70: hot air

### BEST MODE FOR CARRYING OUT THE INVENTION

A resin transfer molding process is divided into the step of mainly producing a preform (abbreviated hereinafter as the step (I)) and the step of infusing and impregnating resin into the preform to produce fiber reinforced plastics by further curing (abbreviated hereinafter as the step (II)). In these steps, a reinforcing fiber base material and a matrix resin as materials for fiber reinforced plastics to be molded need to be heated and cooled to a predetermined temperature.

That is, in the step (I), when a reinforcing fiber base material has resin materials such as thermoplastic or thermosetting resin on the surface thereof, particularly, heating and pressurizing of the reinforcing fiber base material soften the resin materials and bond the interlaminar of the reinforcing fiber base materials to improve the shape stability of the preform, and additionally adjustment of heating temperature controls the thickness of the preform.

In the step (II), the matrix resin being impregnated into the preform is heated in infusing the resin to lower resin viscosity for improving impregnating ability, and heated to curing temperature after being impregnated so that the matrix resin is cured.

A forming-molding tool used in the present invention has a heating mechanism for developing heating conditions required for such steps, so that a preform or fiber reinforced plastics may be produced without heating by an oven.

A forming-molding tool used in the present invention is hereinafter described.

A forming-molding tool used in the present invention is a forming-molding tool obtained by integrating a face plate part and a flat plate part for forming a hollow convex part, in which metallic piping as a flow path of a heating medium is integrated with the back surface of the face plate part by a thermally conductive material and a rubber cord is integrated with the outside of a region used for forming or molding in the flat plate part.

A forming-molding tool used in the present invention is used not merely as a forming tool for forming a preform used in producing fiber reinforced plastics on the basis of a resin transfer molding process, but also as a molding tool for producing fiber reinforced plastics from a preform, which is described later in detail. Naturally, as required, a forming-molding tool having the constitution used in the present invention is used as a forming tool to produce a preform, and thereafter the preform may be also molded by using another molding tool.

The present invention is hereinafter described in further detail with reference to Figs.

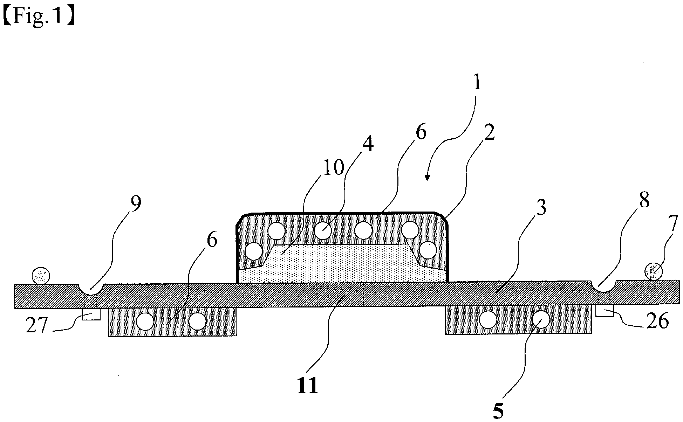

Fig. 1 is a schematic cross-sectional view for describing a forming-molding tool 1 used in the present invention, and a C-shaped face plate part 2 is integrated with a flat plate part 3 to form a hollow convex part, which composes a forming part for forming a preform into a predetermined shape.

The convex part as a forming plane for shaping a preform is composed of the C-shaped face plate part 2 and the flat plate part 3 and made hollow, so that heat capacity of the convex part 2 may be decreased as much as possible. Then, decreasing such heat capacity allows a forming-molding tool to be heated or cooled to a predetermined temperature in a short time. In particular, the tool for forming and molding large-sized components such as structural materials for aircraft is so large that a technique for promptly heating or cooling the whole mold to a predetermined temperature is very useful from the viewpoint of shortening molding time.

The face plate part 2 and the flat plate part 3 are integrated. The integration refers to a structure such that airtightness is maintained by sealing weld. Unless the face plate part 2 for shaping a preform and the flat plate part 3 having sealing spots of a rubber sheet used in forming are integrated so as to maintain airtightness, in the case where the inside covered with the rubber sheet is evacuated and decompressed, air leakage is caused and sufficient pressure may not be applied to a laminate of reinforcing fiber fabrics. Also, in the case of infusing resin into a preform, air leakage is caused similarly and results in voids and resin starve. Accordingly, the face plate part 2 and the flat plate part 3 need to be integrated into a structure such that airtightness is maintained by sealing weld.

In addition, metallic piping 4 as a flow path of a heating medium is placed on the back surface (the inside) of the C-shaped face plate part 2 forming a hollow convex part. In a forming-molding tool used in the present invention shown in Fig. 1, piping 5 as a flow path of a heating medium is also placed on the back surface of the flat plate part 3. The piping 4 and 5 are connected to a temperature controller for heating and discharging media such as water or oil, and heated media is run from the temperature controller into the piping 4 and 5 to thereby heat the face plate part 2 and the flat plate part 3. The back surface of the face plate part 2 and the flat plate part 3 forming a hollow convex part refers to the surface opposite to the surface contacting with the reinforcing fiber fabrics in forming and molding, or opposite to the surface placed inside the sealed space.

In the present invention, the face plate part 2 and the flat plate part 3 are thus heated by heated water or heated oil with high heat transfer rate unlike by hot air heated with an oven. Thus, temperature control of the tool may be performed extremely promptly with high precision. In the case of hot air heated with an oven, heating unevenness is caused between the spots against which hot air blows well and blows less; however, according to the present invention, the tool is directly heated by running a heating medium into the piping placed in the tool, so that heating unevenness is so small that homogeneous heating may be performed.

In the case where a forming-molding tool used in the present invention is used only for producing a preform used in a resin transfer molding process, piping 5 as a flow path of a heating medium does not necessarily need to be placed on the back surface of the flat plate part 3; however, in the case of being used also as a molding tool for producing fiber reinforced plastics by infusing and curing a matrix resin into a preform, the matrix resin adheres also to the flat plate part, so that the matrix resin adhering to the flat plate part needs to be cured and demolded. Thus, piping 5 as a flow path of a heating medium is preferably placed also on the back surface of the flat plate part 3.

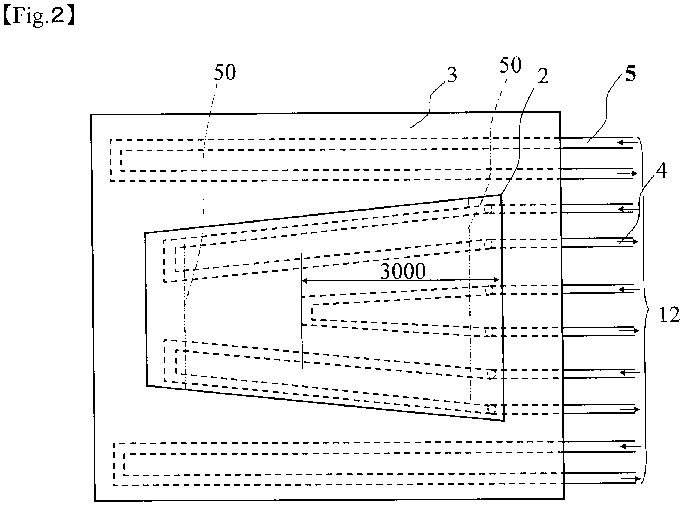

Fig. 2 shows a schematic top view of a forming-molding tool 1, showing the location of the piping 4 and 5 as a flow path of a heating medium.

The specifications such as a number and location of the piping 4 and piping 5 are not particularly limited, and yet the piping 4 and 5 need to be placed with the number and specifications for supplying sufficient heat quantity for heating a forming-molding tool to a predetermined temperature. In a forming-molding tool shown in Fig. 2, six pipes and four pipes are shown in the piping 4 and the piping 5 respectively, and each pair of the pipes is connected to form U shape. In Fig. 2, the arrows shown in the piping 4 and piping 5 show the direction of a heating medium running from the temperature controller.

As shown in Fig. 2, a connection port 12 of the piping 4 and piping 5 to the temperature controller is preferably brought together on one side of a forming-molding tool by reason of being easily connected to the line of a heating medium of the temperature controller. Also, as shown in Fig. 2, the piping 4 is preferably disposed up to the outside of a trim line 50 of a product. A preform in the shape of a product may be sufficiently heated by disposing the piping 4 up to the outside of the trim line of a product. The manner of connecting the piping 4 and piping 5 to the temperature controller is not particularly limited, and yet needs to correspond to the number of the lines of a heating medium mountable on the temperature controller.

In the present invention, the piping 4 is integrated with the back surface of the face plate part 2 forming a convex part by a thermally conductive material. Fig. 1 shows a state such that the piping 4 and piping 5 as a flow path of a heating medium are covered with the thermally conductive material 6 and integrated with the back surface of the face plate part 2 and the flat plate part 3 forming a hollow convex part. Thus, the integration by the thermally conductive material renders so favorable thermal conductivity from a heating medium running in the inside of the piping that a forming-molding tool may be uniformly heated. The integration by the thermally conductive material described herein means that the surface of the piping 4 disposed in the back surface of the face plate part 2 is fixed in the face plate part while being covered with the thermally conductive material and that, in other words, the piping 4 is disposed in the back surface of the face plate part 2 through the thermally conductive material.

Then, the piping 5 is also preferably integrated with the back surface of the flat plate part 3 by the thermally conductive material from a similar viewpoint.

The thermally conductive material described in the present invention is preferably an epoxy resin material containing metal powder excellent in thermal conductivity and a cement material containing carbon. Among them, a cement material containing carbon is preferable. A cement material containing carbon is preferable by reason of having sufficient heat transfer rate and excellent work efficiency. The cement material is preferably applied, cured and hardened by using a trowel so as to cover the piping and integrate the piping with the forming-molding tool (the face plate part 2 and the flat plate part 3), as shown in Fig. 1.

It is not preferable that the piping is integrated with the forming-molding tool by welding over the total length by reason of bringing a possibility of causing welding distortion in the forming-molding tool. Since a convex part of the forming-molding tool used in the present invention is formed into a hollow convex part by using the face plate part, it is not preferable that the piping is integrated with the back surface of the face plate part forming a convex part by welding by reason of bringing a possibility that the shape of a convex part is deformed by welding distortion. In particular, since shape dimensional accuracy is required to high level in the structural materials for aircraft, the deformation of the forming-molding tool by welding distortion is not preferable by reason of bringing a possibility of causing a problem of not satisfying dimensional accuracy of a molded product. However, spot welding may be performed for temporarily joining the piping to the convex part and the flat plate part. Then, the welding for temporarily joining needs to be performed in the spots in which welding distortion is reduced to the minimum or the occurrence of welding distortion brings fewer problems.

In the present invention, the piping 4 is metallic piping. Various kinds of metals such as stainless steel, iron, aluminum alloy, titanium alloy and copper alloy may be used for the materials of metal used for the piping 4, and it is more preferable that the piping made of copper alloy among them is easily transformed into the optimum shape in placing the piping in a hollow convex part by reason of being excellent in processability. With regard to the piping 5, the piping made of copper alloy is preferable for the same reason.

In addition, in the forming-molding tool used in the present invention, a rubber cord with a diameter of 10 mm or more and 100 mm or less is integrated with the tool so as to make a closed region surrounding a convex part of the forming-molding tool 1. That is, the rubber cord is integrated with the outside of a region used for forming or molding in the flat plate part 3. The integration described herein means that the rubber cord and the flat plate part 3 are fixed so as to maintain airtightness. Specifically, the rubber cord and the flat plate part 3 are preferably bonded and integrated through an adhesive for rubber so as to maintain airtightness.

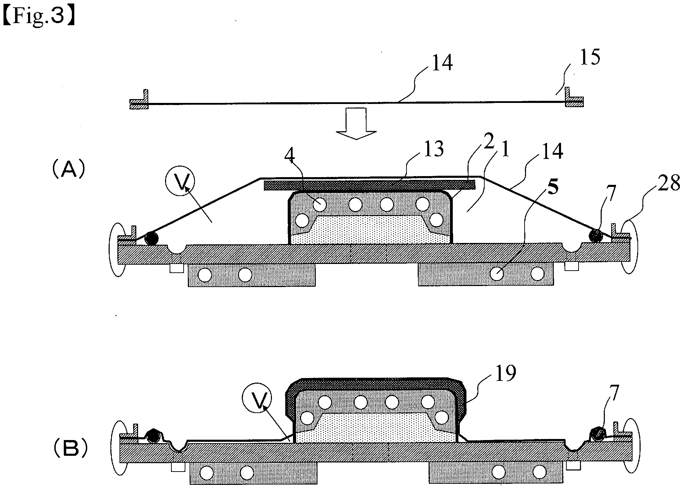

Fig. 1 shows a state such that the rubber round cord 7 having a circular cross section is integrated with the flat plate part 3 of the forming-molding tool 1. Figs. 3 (A) and (B) show a state such that a laminate 13 of a reinforcing fiber base material is placed on a hollow convex part of the forming-molding tool 1 and covered with a rubber sheet 14 to evacuate the sealed space by the rubber sheet 14 and the rubber cord 7 to evacuate and apply atmospheric pressure to the laminate 13 of a reinforcing fiber base material through the rubber sheet 14, whereby the laminate 13 is formed into the convex shape of the forming-molding tool 1.

Since the rubber cord 7 is integrated with the flat plate part 3 of the forming-molding tool 1 so as to make a closed region surrounding a convex part, the rubber sheet 14 may seal the forming-molding tool by contacting with the rubber cord 7, whereby the rubber sheet 14 may seal the forming-molding tool without using the subsidiary material such as a tacky tape.

Then, a diameter of the rubber cord 7 is not less than 10 mm because contact area of the rubber sheet 14 with the rubber cord is so small that sealing is made with difficulty between the rubber sheet 14 and the rubber cord. Meanwhile, a diameter of the rubber cord 7 is not more than 100 mm because handling ability is deteriorated, such that the forming-molding tool used in the present invention becomes heavy.

It is also one of preferred embodiments that the rubber sheet 14 is provided to the forming-molding tool so as to contact with the rubber cord 7 by using a clamp 28, as required, whereby sealing is assisted between the rubber sheet 14 and the rubber cord 7. It is also one of preferred embodiments that one rubber sheet 14 is fixed to the forming-molding tool by a hinge so as to be opened and closed, whereby handling ability is improved.

The materials for the rubber cord and the rubber sheet are not particularly limited, and yet the forming-molding tool used in the present invention is heated in step (I) or step (II), so that the rubber cord and the rubber sheet need to have heat resistance to the heating temperature. The materials for the rubber cord and the rubber sheet are preferably silicon rubber having comparatively high heat resistance among rubber materials from the viewpoint of heat resistance.

In addition, in the forming-molding tool 1 shown in Fig. 1, a hole 11 is placed in the flat plate part 3. This hole 11 is made in a region of the flat plate part 3, which is surrounded by the face plate part 2 forming a hollow convex part. Since the face plate part 2 and the flat plate part 3 are sealed, unless the hole 11 is made in the flat plate part 3, there is a possibility that the convex port is distorted when atmospheric pressure is applied to the convex part, in the case where the flat plate part 3 is covered with silicon rubber or a bagging film to form or mold by evacuating the inside thereof. As prior art, in the case of using a forming tool or a molding tool such that a convex part made of a solid member, there is no possibility of being distorted even though atmospheric pressure is applied to the convex part, so that the above-mentioned problem is not important; however, in the present invention, as described below in detail, the formation of a hollow convex part with the face plate part 2 and the flat plate part 3 allows them to be heated and cooled to a determined temperature with high precision in a short time, so that there is a possibility of being distorted when atmospheric pressure is applied to the hollow convex part.

The placement of the hole 11 allows the piping 4 placed inside the forming-molding tool to be repaired and inspected from the hole 11 after producing the forming-molding tool. That is, the hole 11 is preferable by reason of serving as an access hole.

In addition, the placement of the hole 11 allows a thermally conductive material to be disposed from the hole 11 in the case where the piping 4 and the face plate part 2 forming a hollow convex part are integrated by the thermally conductive material as described later, and allows a heat insulator 10 to be disposed from the hole 11 in the case where the heat insulator 10 is disposed in the space inside a hollow convex part.

The materials for composing the face plate part 2 and the flat plate part 3 are not particularly limited, and metallic materials such as stainless steel, iron, aluminum alloy, titanium alloy and Invar alloy are preferable by reason of favorable thermal conductivity. In particular, Invar alloy is preferable for the reason that thermal expansion coefficient is approximately 1/100 to 1/10 of that of iron and is able to restrain deformation of the forming-molding tool during heating. CFRP (Carbon Fiber Reinforced Plastic) is also one of preferable materials from a similar viewpoint.

In addition, with regard to the forming-molding tool, at least, the thickness of the face plate part 2 composing the forming plane is 1 mm or more and 15 mm or less. The thickness of the face plate part 2 is preferably thinner from the viewpoint of decreasing heat capacity of the tool. That is, if the thickness of the face plate part 2 is more than 15 mm, heat capacity is so high that it takes a long time to heat and cool to a predetermined temperature. The thickness is preferably 10 mm or less. Meanwhile, if the thickness is less than 1 mm, it is difficult to process into a hollow convex part having a predetermined shape.

In the case where the forming-molding tool used in the present invention is also used as a molding tool for producing fiber reinforced plastics from a preform, the thickness of the flat plate part 3 is 1 mm or more and 15 mm or less from a similar viewpoint, preferably 10 mm or less.

Then, if the thickness thereof is less than 1 mm, there is a possibility that the face plate part 2 and the flat plate part 3 composing the forming-molding tool are easily distorted by unexpected external force during forming or molding. In particular, a large-sized forming-molding tool used for the structural materials for aircraft is occasionally moved while being suspended by a crane, and then there is a possibility that the forming-molding tool is distorted by flexure due to its own weight. The face plate part 2 and the flat plate part 3 are preferably 1 mm or more from such viewpoint.

Since the thickness of the face plate part 2 and the flat plate part 3 is prescribed for efficient heating as described above, the calculation of the thickness is not considered in the spots in which it is not necessary to heat.

In addition, in the forming-molding tool used in the present invention, a resin inlet 8 and a bleeding port 9 of a matrix resin for resin transfer molding are integrally provided for the flat plate part 3 between the convex part and the rubber cord 7, as shown in Fig. 1.

With regard to positional relation of the rubber cord 7 with the resin inlet 8 and the bleeding port 9, the rubber cord 7 is preferably at the outside of the resin inlet 8 and the bleeding port 9 for a matrix resin in the case of also using the forming-molding tool 1 used in the present invention for molding. It is not preferable that the rubber cord 7 is integrated in the inside of the resin inlet 8 and the bleeding port 9 because a matrix resin adheres to the rubber cord in injecting a matrix resin.

In the case where the resin inlet 8 and the bleeding port 9 are placed to the forming-molding tool 1, the resin inlet 8 and the bleeding port 9 need to be sealed for sealing the inside covered with a rubber sheet in forming.

As shown in Fig. 1, the resin inlet 8 and the bleeding port 9 for a matrix resin are through-holes and preferably provided with couplers 26 and 27 mountable with a tube for infusing and a tube for evacuating. It is preferable to mount the couplers 26 and 27 because that allows each of the tubes to be easily mounted in disposing in the resin inlet and the bleeding port without using the subsidiary material such as a sealant and reliability of sealing in the part is also high.

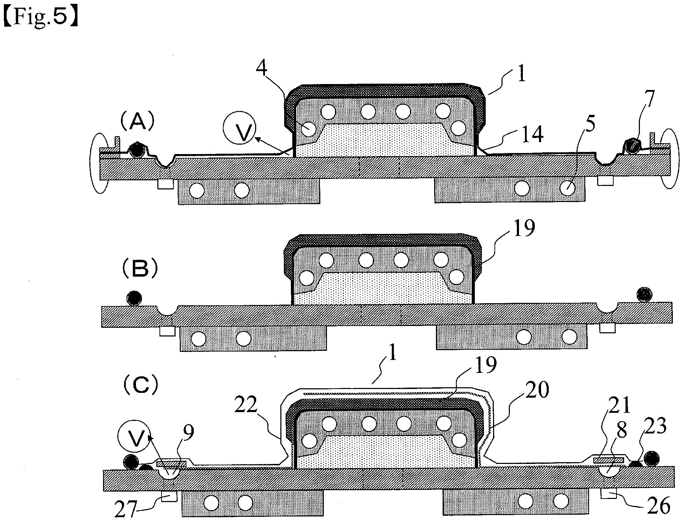

Fig. 5(C) shows an example of the case of infusing a matrix resin by using the forming-molding tool 1. The resin inlet 8 and the bleeding port 9 for a matrix resin are provided for the forming-molding tool 1 shown in Fig. 5(C). The preform 19 and the subsidiary material 20 for infusing and bleeding a matrix resin are disposed on the forming-molding tool 1 and covered with a bagging film 22, and the bagging film 22 and the forming-molding tool 1 are sealed by using a sealant 23 to evacuate the sealed inside. A resin inlet and a bleeding port need not be separately provided in molding by previously providing the resin inlet 8 and the bleeding port 9 for a matrix resin on the forming-molding tool 1, so that readiness time for molding may be shortened.

A resin inlet and a bleeding port may be separately provided on the tool. For example, in order to secure a flow path in infusing and bleeding of a matrix resin, a C-shaped cross section channel made of metal may be disposed on the face plate part 2. However, in this case, the step of disposing the channel becomes necessary, and additionally it is necessary that the bagging film is not pushed up by the channel in further sealing with the bagging film.

With regard to the forming-molding tool used in the present invention, the face plate part 2 forming a convex part is also preferably formed by press working. Ordinarily, a mold is prepared by cutting work in the technical field of the present invention. However, in the case of cutting work, the problem is that a convex part is restricted in thinning and the processing cost is high as compared with press working. The press working allows the face plate part forming a hollow convex part to be thinned inexpensively. It is also one embodiment that a hollow convex part is formed by the press working for reducing heat capacity of a convex part of the forming-molding tool, and thereafter the cutting work is performed for the purpose of improving dimensional accuracy.

The forming-molding tool used in the present invention as described above is a tool usable as both a forming tool and a molding tool. That is, a laminate of reinforcing fiber fabrics is formed by the forming-molding tool to produce a preform, and thereafter fiber reinforced plastics may be molded as required without demolding the preform from the forming-molding tool. Thus, the time required for molding may be further shortened. Since the preform having low shape stability, not impregnated with a matrix resin, need not be demolded from the forming-molding tool, moved and disposed to a molding tool, the possibility of damaging the preform becomes so low that fiber reinforced plastics excellent in grade may be produced resultantly.

The reinforcing fiber fabrics used for producing the preform have preferably resin materials such as thermoplastic or thermosetting resin on the surface thereof. The reinforcing fiber is preferably composed of carbon fiber, aramid fiber or glass fiber, and the form of the reinforcing fiber fabrics is preferably noncrimp, plain weave, satin weave or twill weave. Among them, noncrimp is more preferable for the reason that bending of the reinforcing fiber is so small that strength occurrence rate is increased.

The resin material is preferably resin favorable in adhesive property to a matrix resin after being hardened. Examples thereof include polyamide, polyimide, polyamide imide, polyether imide, polyether sulfone, polysulfone polyphenylene ether, polyether ether ketone, and modified resin and copolymer resin thereof.

Specifically, a process for producing a preform for resin transfer molding by using the forming-molding tool is described below.

The production of a preform for resin transfer molding uses the forming-molding tool and undergoes through the following:
(A) placing step of placing on the forming-molding tool a laminate of which reinforcing fiber fabrics having thermoplastic and/or thermosetting resin on their surface are laminated;
(B) forming step of forming the laminate by evacuating an inside of sealed space after the whole laminate is covered with a rubber sheet to seal the forming-molding tool; and
(C) heating and pressurizing step of bonding the reinforcing fiber fabrics through the thermoplastic and/or thermosetting resin on the surface of the reinforcing fiber fabrics by running a heating medium into the piping to heat and pressurize the laminate after being formed.

Figs. 3(A) and 3(B) show a process for producing a preform for resin transfer molding by using the forming-molding tool.

Fig. 3(A) shows a state such that a laminate 13 in which the reinforcing fiber fabrics having resin materials such as thermoplastic or thermosetting resin on the surface thereof is laminated is disposed on a convex part of the forming-molding tool 1, covered with a rubber sheet 14, and sealed between the rubber sheet 14 and a rubber cord 7.

Then, it is also one preferred embodiment that the laminate 13 is integrated by bonding previously performing interlaminar partially for the purpose of improving handling property thereof. Here, a laminate such that interlaminar bonding is previously performed on the whole surface is not preferable for the reason that formability is extremely poor.

A frame 15 is preferably placed at the ends of the rubber sheet as shown in Fig. 3(A) for the purpose of improving handling property of the rubber sheet 14. Placing the frame 15 in this manner brings a merit such that positioning for disposing the rubber sheet 14 on the forming-molding tool 1 may be facilitated. In order to perform positioning more easily, it is also one preferred embodiment that pins are placed in the forming-molding tool 1 while holes for the pins are placed in the frame of the rubber sheet, so that the disposition of the rubber sheet is unambiguously determined.

After sealing between the rubber sheet 14 and the rubber cord 7, as shown in Fig. 3(B), the inside of sealed space is evacuated by a vacuum pump or the like, so that atmospheric pressure is applied to the laminate 13, which is formed. Evacuating in the present invention refers to providing a state of negative pressure by evacuation, and the application of atmospheric pressure means to apply pressure by atmosphere as a result of evacuation, not to apply the same pressure as the absolute value of standard atmospheric pressure or the like.

After being shaped, the laminate 13 is checked if a defect such as wrinkle is present or not through the rubber sheet while atmospheric pressure is kept applying to the laminate 13 by continuing evacuation. Thus, transparent or translucent rubber sheet is used for the rubber sheet. The situation of forming is also preferably confirmed by performing dimensional measurement through the rubber sheet as required.

Thereafter, a heating medium heated by a mold temperature controller is run into the piping 4 to heat the forming-molding tool 1 and heat the laminate 13 after being formed. As a result, thermoplastic or thermosetting resin intervening between the layers of the reinforcing fiber fabrics is softened and melted to bond the layers, further continue heating for a predetermined time as required, thereafter stop heating and cool the laminate 13, so that a preform 19 in which the reinforcing fiber fabrics are bonded while maintaining the formed shape may be obtained.

At that time, the forming-molding tool may be heated as required also by running a heating medium into the piping 5.

Then, the rate of temperature rise of the forming-molding tool is preferably 0.5°C/minute or more and 3°C/minute or less in a heating temperature range of 40°C or more and 130°C or less. If the rate of temperature rise is less than 0.5°C/minute, it takes so much time to raise temperature to a predetermined temperature that production time for a preform is prolonged. Meanwhile, if the rate of temperature rise is more than 3°C/minute, temperature rise of a reinforcing fiber base material may not follow the rate of temperature rise of the forming-molding tool, and consequently heating unevenness is easily caused.

The laminate 13 may be in room temperature when being fit to the shape of the forming-molding tool, and thermoplastic or thermosetting resin between the layers of a reinforcing fiber base material is softened and melted by heating to improve slip between the layers of a reinforcing fiber base material. As a result, it is preferable that formability is improved and wrinkle is prevented from occurring.

The heating temperature of the laminate 13 is preferably glass transition temperature (may be abbreviated hereinafter as Tg) or more of thermoplastic and/or thermosetting resin existing on the surface of the reinforcing fiber fabrics, and 200°C or less. Here, the measuring method of Tg of the resin material is based on JIS K 7121 2006 and the measurement is performed at a rate of temperature rise of 10°C/minute.

The resin material located between the layers of the laminate 13 is softened by heating the laminate 13 over Tg and evacuated as it is so as to apply the laminate pressure to produce a preform, and thereby the layers of the laminate may be bonded by the resin material so firmly that shape stability of a preform may be improved.

Meanwhile, the molding temperature of the structural materials for aircraft made of fiber reinforced plastics comparatively high in molding temperature is typically approximately 180°C to 200°C, and the upper limit of heating temperature in the forming step is preferably less than the upper limit of heating temperature in the molding step. The subsidiary material such as rubber sheet and a mold temperature controller are frequently determined at the molding temperature of the structural materials for aircraft, and the subsidiary material and the mold temperature controller having heat-resistance or capable to be heated to more than 200°C are occasionally in such a special specification as to bring a possibility that material cost and equipment cost become high. Thus, the heating temperature herein is preferably determined at 200°C or less.

In addition, the thickness of a preform may be regulated by regulating the heating temperature of the laminate 13. That is, the heating temperature of the laminate 13 may regulate the degree of softening of the resin material and deformation (collapse) of the resin material by evacuating to regulate the thickness of a preform.

The fiber volume fraction (may be abbreviated hereinafter as Vf) influencing weight and dynamic characteristics of fiber reinforced plastics may be also improved in such a manner that a matrix resin is infused and impregnated into a preform to thereafter bleed the matrix resin excessively impregnated in the bleeding step, and the regulation of the thickness of a preform is extremely important for the reason that the volume fraction of fiber depends greatly on the thickness of a preform.

In this manner, since the improvement of shape stability of a preform and the thickness of a preform are regulated by heating control of the laminate 13, it is extremely important to control the heating with high precision, and to heat and cool to a predetermined temperature promptly by that the forming-molding tool 1 used in the present invention.

The pressure applied to the laminate 13 may be also controlled as required. With regard to the regulation of such pressure, the pressure (gage pressure) in the sealed space is preferably 10 kPa or more and 1000 kPa or less by regulating degree of vacuum, more preferably 10 kPa or more and 101.3 kPa or less. This range is preferable for the reason that the pressure may be regulated only by decompression in the atmosphere by a vacuum pump or the like and that allows to simplify the equipment. If the pressure is less than 10 kPa, it is not preferable because the pressure is so low that thickness unevenness of a preform is easily caused.

One of the objects of the present invention is to produce a preform and fiber reinforced plastics by using a heatable forming-molding tool without using expensive heating apparatuses such as an autoclave and an oven, but a pressure device such as an autoclave may be used together as required. That is, a preform may be produced in such a manner that the laminate 13 is disposed in the forming-molding tool 1 and formed at atmospheric pressure by evacuation to thereafter apply higher pressure than atmospheric pressure by using a pressure device such as an autoclave as required. The laminate is pressurized by higher pressure than atmospheric pressure, so that the thickness of a preform is thinned more and a preform for molding fiber reinforced plastics having high Vf may be produced.

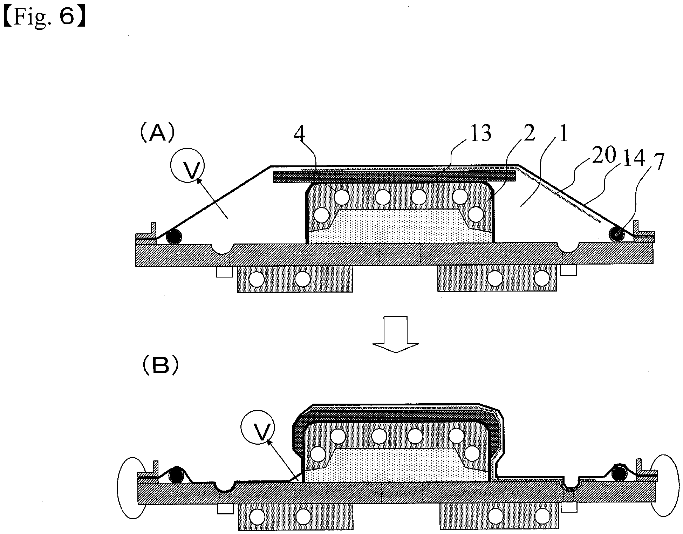

In addition, with regard to the production of a preform, as shown in Fig. 6, a subsidiary material such as resin distribution medium 20 for a flow path of the matrix resin infused in resin transfer molding is disposed and formed similarly in disposing the laminate 13 on a hollow convex part of the forming-molding tool 1. Thus, the step of separately disposing a subsidiary material on a preform may be omitted in producing fiber reinforced plastics according to the present invention, by using the obtained preform. Since the resin distribution medium 20 is typically made of thermoplastic resin such as nylon, the resin distribution medium 20 is formed into the shape of a hollow convex part of the forming-molding tool 1 by the heat and pressure step in producing a preform, and it fits the formed laminate 13 in shape. Thus, there is a merit such that bagging is easily performed in resin transfer molding.

Subsequently, a process for producing fiber reinforced plastics not belonging to the present invention will be described. The fiber reinforced plastics may be obtained by resin transfer molding with the use of the forming-molding tool through the following:
(A) placing step of placing on the forming-molding tool a laminate of which reinforcing fiber fabrics having thermoplastic and/or thermosetting resin on their surface are laminated;
(B) forming step of forming the laminate by evacuating an inside of sealed space to apply atmospheric pressure to the laminate after the whole laminate is covered with a rubber sheet to seal the forming-molding tool;
(C) heating and pressurizing step of bonding the reinforcing fiber fabrics through the thermoplastic and/or thermosetting resin on the surface of the reinforcing fiber fabrics by running a heating medium into a piping to heat and pressurize the laminate after being formed;
(D) subsidiary material placing step of further placing resin distribution medium and peel ply for infusing and impregnating a matrix resin while the sealing of the rubber sheet is released and obtained preform is kept in the forming-molding tool without being demolded;
(E) bagging step of evacuating the inside of sealed space after the preform, the resin distribution medium and the peel ply are covered with a bagging film to seal the forming-molding tool;
(F) resin infusing and impregnating step of infusing a matrix resin while evacuating the inside of the sealed space to impregnate the matrix resin into the preform through the resin distribution medium;
(G) resin curing step of heating and curing the matrix resin by running a heating medium into the piping; and
(H) demolding step of demolding a molded product from the forming-molding tool.

A process for producing fiber reinforced plastics will be described below in detail with reference to Fig. 5. Fig. 5(A) is a cross-sectional view showing an example of a state of producing a preform 19 by using the forming-molding tool 1 . Fig. 5(B) shows a state of heating the laminate at a predetermined temperature and time to produce the preform 19 and thereafter remove the rubber sheet 14. Fig. 5(C) shows a state of evacuating the inside of the sealed space by a vacuum pump to perform bagging.

Steps (A) to (C) are basically the same as the above-mentioned process for producing the preform. Then, step (D) or later is performed as follows. That is, after producing the preform (Fig. 5(A)), the sealing by the rubber sheet 14 is released and the obtained preform is not demolded and is kept in the forming-molding tool (Fig. 5(B)), and subsidiary materials such as the resin distribution medium 20 and peel ply for infusing and impregnating a matrix resin are disposed on the preform 19. Here, in the case where subsidiary materials such as the resin distribution medium 20 and peel ply are disposed in producing the preform, the subsidiary materials need not be disposed again after forming.

Thereafter, all of the preform 19 and the subsidiary materials such as the resin distribution medium 20 and peel ply are covered with the bagging film 22 and sealed (Fig. 5(C)). On this occasion, a sealant 23 is preferably used. A plate 21 is preferably disposed on the resin inlet 8 and the bleeding port 9 so that the resin inlet 8 and the bleeding port 9 for a matrix resin provided on the forming-molding tool 1 are not blocked by atmospheric pressure when evacuation is performed later.

Subsequently, a matrix resin is impregnated into the preform from the resin inlet 8 and infused through the resin distribution medium 20 while the inside of the sealed space is evacuated.

After a matrix resin is impregnated into the preform 19, it is preferable that the infusion of a matrix resin is stopped to close the resin inlet 8 and bleeding a matrix resin excessively impregnated into the preform from the bleeding port 9. In this manner, the resin excessively impregnated is bleeded, so that weight and dynamic characteristics may be improved by improving the reinforcing fiber volume fraction Vf of a molded product. A matrix resin excessively impregnated into the preform is preferably bleeded as required also from the closed resin inlet 8. The effect of uniforming Vf may be expected by bleeding a matrix resin also from the resin inlet 8 in this manner.

A heating medium is run into the piping 4 after a matrix resin is infused in this way, and the matrix is heated and cured to demold a molded product with the matrix resin cured from the forming-molding tool, so that fiber reinforced plastics may be obtained.

In this manner, fiber reinforced plastics are produced by using the forming-molding tool, and the molding step may be prepared without demolding the preform, so that the time required for molding may be preferably shortened. Since the preform having low shape stability, not impregnated with a matrix resin, need not be demolded, moved and disposed to a molding tool, the possibility of damaging the preform becomes so low that fiber reinforced plastics excellent in grade may be preferably produced resultantly.

With regard to the production of fiber reinforced plastics, the preform produced by the above-mentioned process may be also placed in a molding tool separately prepared to infuse, impregnate and cure the matrix resin. In particular, in the case where dimensional accuracy of the outer shape is required at extremely high accuracy, the preform is preferably placed and molded in a female mold with the outer shape determined. In particular, in the case where dimensional accuracy is required at an accuracy of ±1 mm or more, the preform produced by the above-mentioned process is preferably molded in a female mold separately prepared.

In step (D), a caul plate is preferably placed on the resin distribution medium and the peel ply. The resin distribution medium 20 typically has irregularities in order to distribute resin. Thus, the surface roughness of a fiber reinforced plastic molded product on the side with the media disposed roughens as compared with the side contacting with the forming-molding tool. Then, in the case of improving the surface roughness, it is preferable that a caul plate is placed on the subsidiary materials such as resin distribution medium and peel ply to perform after-mentioned evacuation, resin infusion and curing in the state. The placement of a caul plate allows atmospheric pressure to be applied to fiber reinforced plastics through the caul plate, so that the surface roughness on the side with the media disposed may be also decreased to improve surface smoothness.

### EXAMPLES

The present invention will be described below more specifically with reference to examples, reference examples and comparative examples.

### <Example 1>

The forming-molding tool 1 shown in Figs. 1 and 2 was constituted to perform heating and cooling tests.

### (Forming-molding tool)

Fig. 1 shows a cross-sectional view of the forming-molding tool 1 and Fig. 2 shows a top view thereof. Here, Fig. 2 is a view showing only the piping 4 and the piping 5 disposed on the back surface of the face plate part 2 and the flat plate part 3 except for the face plate part 2 and the flat plate part 3 forming a hollow convex part.

The face plate part 2 forming a hollow convex part was obtained by making SUS304 with a thickness of 3 mm into a C-shape. The convex part had a taper so that the width was 300 mm at one end (right end in Fig. 2) and 150 mm at the other end (left end in Fig. 2). The convex part was uniformly 5000 mm in length (in the direction from right to left in Fig. 2) and 100 mm in height (in the direction from upward to downward in Fig. 1). The product size was 4800 mm in a length of the convex part of 5000 mm, and a trim line 50 of the product was drawn at 100 mm inward from each of both ends.

Meanwhile, the flat plate part 3 was composed of SUS304 with a thickness of 10 mm, and was 1300 mm in width (in the direction from upward to downward in Fig. 2) and 6000 mm in length (in the direction from right to left in Fig. 2). Twelve holes 11 with a diameter of 100 mm were provided in the longer direction at the center of the width direction of the flat plate part 3, and an opening (not shown) was provided at the end part on the wider side of the hollow convex part in order to dispose a heat insulator 10 later. A channel as the fill port 8 (ϕ22 mm) and the bleeding port 9 (ϕ14 mm) of a matrix resin was provided in the vicinity of both ends of the flat plate part 3 (the end part in the right and left directions in Fig. 1). A thread groove was provided as a through-hole for the channel, and mounted with couplers 26 and 27 mountable with tubes (outside diameter of 12 mm) for filling and evacuating. These couplers were wound with a sealing tape to secure sealing.

A copper pipe with a diameter of 18 mm (inside diameter of 16 mm) was disposed as the piping 4 on the back surface of the face plate part 2 by six pipes in total as shown in Fig.
1. Four pipes thereamong were disposed on the back surface of the top board in the hollow convex part, and the other two pipes were disposed on the back surface of the side board. Four pipes among the six pipes were provided so as to project from the trim line 50 by 50 mm as shown in Fig. 2. Since the hollow convex part had a taper and thinned to 150 mm at the tip, two pipes disposed in the middle among four pipes of the piping 4 disposed on the back surface of the top board were not provided at the tip of the convex part but provided within 3000 mm from the end part on the wider side of the convex part.

The piping 4 was covered with cement 6 containing carbon (thermally conductive cement) and integrated with the face plate part 2.

The face plate part 2 with the piping 4 thus integrated was integrated with the flat plate part 3 by sealing weld.

The piping 5 was mounted to the flat plate part 3 by the same process as the piping 4 mounted to the back surface of the face plate part 2. The heat insulator 10 made of glass wool was disposed inside the hollow convex part from the opening provided for the flat plate part 3.

In addition, the silicon rubber cord 7 with a diameter of 30 mm was bonded and integrated with the flat plate part 3 at the outside of the resin inlet 8 and the bleeding port 9 by a silicon adhesive. The silicon rubber cord 7 and the flat plate part 3 were sealed by the silicon adhesive.

A heating medium line of a mold temperature controller (NCN-200, manufactured by Matsui Manufacturing, Co., Ltd.) was connected to the piping 4 and the piping 5 of the forming-molding tool 1 thus prepared. Heating medium oil (BARRELTHERM 400, manufactured by MATSUMURA OIL CO., LTD.) was used as the heating medium and may be heated up to a temperature of 200°C by the mold temperature controller.

### (Heating and cooling tests of forming-molding tool)

In the forming-molding tool with the constitution as described above, type K thermocouple was mounted on the center line in the width direction (right and left directions in Fig. 1) of the top board part of the hollow convex part at intervals of 50 mm. In addition, type K thermocouple was mounted on the center line in the height direction of the side board part of the convex part at intervals of 50 mm. All of the type K thermocouples were connected to a data logger so as to monitor the temperature of the spots mounted with the thermocouples. Thereafter, a heat insulator in which glass wool was filled into a cloth bag was disposed so as to cover the whole forming-molding tool 1.

The preset temperature of the mold temperature controller was set at a temperature of 92°C to heat the forming-molding tool from room temperature. As a result, the forming-molding tool was within a temperature of 90 ± 1°C in all spots at 90 minutes after starting heating by the mold temperature controller, and it was confirmed that heating can be performed very quickly with high precision.

Next, the preset temperature of the mold temperature controller was set at a temperature of 40°C to cool the forming-molding tool from 90°C to 40°C. As a result, the forming-molding tool was cooled to 40°C or less in all spots at 25 minutes after starting cooling by the mold temperature controller, and it was confirmed that cooling can be performed very quickly.

### <Example 2>

### (Reinforcing fiber base material)

A unidirectional carbon fiber fabric (a carbon fiber mass per unit area of 190 g/cm²) composed of carbon fiber (T800S, manufactured by Toray Industries Inc.) was used as a reinforcing fiber base material. A particulate resin material (glass transition temperature Tg = 70°C) having thermoplastic resin as the main component was stuck at 27 g/cm² on one surface of the reinforcing fiber base material.

### (Laminate)

The reinforcing fiber base material was cut and laminated to prepare a laminate. The laminated constitution was 32 layers such that the carbon fiber was oriented in the direction of [(45/0/ - 45/90)₄]ₛ, and the shape was a trapezoidal shape having a height of 4900 mm, a lower base of 440 mm and an upper base of 290 mm. Each numerical value in the parentheses signifies degree angle (°) of the carbon fiber in each of the layers, 4 after the parentheses signifies lamination by repeating (45/0/-45/90) for four times, and S after the square brackets signifies that the laminate in the square brackets is further laminated to mirror symmetry (S).

### (Preform production)

As shown in Fig. 3(A), the laminate 13 was placed on the convex part of the forming-molding tool 1. The silicon rubber sheet 14 was prepared and four pieces of the sheets were mounted with a fence 15 composed of L-shaped angle and flat cord made of aluminum (each having a thickness of 3 mm). The silicon rubber sheet 14 was disposed on the laminate 13 to cover the laminate 13, and the laminate 13 was sealed between the silicon rubber sheet 14 and the silicon rubber cord 7. After sealing, the space between the forming-molding tool 1 and the silicon rubber sheet 14 was evacuated by a vacuum pump to form the laminate 13 into the shape of the hollow convex part 2 of the forming-molding tool 1, as shown in Fig. 3(B).

After forming, a thermocouple was mounted on the silicon rubber sheet 14 covering the laminate 13 so as to monitor the temperature of the laminate 13. The thermocouple was mounted on the same location as Example 1, namely, the spot corresponding to the top board part and the spot corresponding to the side board part of the hollow convex part at intervals of 50 mm.

Then, after the situation of forming was confirmed through the silicon rubber sheet 14 to confirm no defects such as wrinkle and notable fiber meander, the whole forming-molding tool 1 was covered with a heat insulator used in Example 1 to thereafter set the preset temperature of the mold temperature controller at a temperature of 92°C and heat the laminate 13 after being formed in the same manner as Example 1. After 90 minutes, it was confirmed that all of the spots were within a temperature of 90 ± 1°C, and thereafter the preform 19 was produced by retaining in the same state for 2 hours.

Subsequently, the preset temperature of the mold temperature controller was set at a temperature of 40°C to cool the preform 19 in the same manner as Example 2. After confirming that the whole preform 19 was cooled to a temperature of 40°C or less, the evacuation by a vacuum pump was stopped to release the preform 19 to the air and the preform 19 was observed after removing the silicon rubber sheet 14.

As a result, it was confirmed that the preform was a favorable preform by reason of no defects such as wrinkle and fiber meander. The thickness of the preform 19 at the spots corresponding to the side board part of the hollow convex part was measured in the longer direction at intervals of 30 mm, and consequently it was confirmed that the thickness at all of the spots was within the intended thickness of 6.24 ± 0.1 mm and dimensional accuracy of the preform was extremely favorable.

### <Reference Example 3>

The resin distribution medium 20 as the subsidiary materials for infusing and impregnating a matrix resin was placed on the preform 19 as shown in Fig. 5(C) while the preform 19 obtained in Example 2 was kept being placed on the forming-molding tool. The resin distribution medium 20 was prepared by two pieces, which were placed so as to connect to the resin inlet 8 as the resin distribution medium for infusing a matrix resin and the bleeding port 9 as the resin distribution medium for vacuuming a matrix resin, respectively as shown in Fig. 5(C). A plate 21 was disposed on the resin inlet 8 and the bleeding port 9 while the resin distribution medium 20 intervened therebetween. A peel ply, not shown in Fig. 5(C), was placed between the preform 19 and the resin distribution medium 20. The peel ply was a subsidiary material placed so that the resin distribution medium 20 was not bonded and integrated with a molded product after hardening a matrix resin.

Each of a coupler 26 for the resin inlet and a coupler 27 for the bleeding port were mounted with a tube made of nylon with an outside diameter of 12 mm.

Thereafter, the preform 19, the resin distribution medium 20 and the like were covered with the bagging film 22 to seal the forming-molding tool 1 by disposing a sealant 23 at the end part of the bagging film 22. A thermocouple was mounted on the bagging film 22 covering the preform so as to monitor the temperature of the preform 19. The thermocouple was mounted at the same location as Example 1, namely, the spot corresponding to the top board part and the spot corresponding to the side board part of the hollow convex part at intervals of 50 mm.

Subsequently, the tube for evacuating was connected to a vacuum pump and the inside of the space sealed by the bagging film 22 was evacuated to confirm no leakage and thereafter heat the preform 19 while the preset temperature of the mold temperature controller was set at a temperature of 72°C.

It was confirmed that the preform 19 was heated to a temperature of 70°C, and thereafter a matrix resin was infused from the tube for filling. The matrix resin infused from the tube stayed in the resin inlet 8 provided for the forming-molding tool 1, and thereafter was infused and impregnated into the preform 19 through the resin distribution medium 20 placed so as to connect to the resin inlet 8.

It was confirmed that the matrix resin was impregnated into the whole preform 19, and thereafter the tube for filling was closed to terminate the infusion of the matrix resin.

After terminating the infusion of the matrix resin, evacuating was subsequently performed from the bleeding port 9 to bleed the matrix resin excessively impregnated into the preform 19 for 1 hour. It was confirmed that the excessive matrix resin reached the bleeding port 9 through the resin distribution medium disposed so as to connect to the bleeding port, and came out of the tube for evacuating.

After terminating the bleeding of the matrix resin, the whole forming-molding tool 1 was covered with a heat insulator in the same manner as Example 1, and the preset temperature of the mold temperature controller was set at a temperature of 132°C to heat the matrix resin impregnated into the preform 19 to a temperature of 130°C.

After it was confirmed that all spots of the preform 19 were heated to a temperature of 130 ± 1°C in the same manner as Reference Example 3, the matrix resin was retained for 2 hours and cured to obtain a molded product.

After terminating the curing, the preset temperature of the mold temperature controller was set at a temperature of 40°C to perform cooling, and after it was confirmed that all spots of the molded product were 40°C or less, the molded product of fiber reinforced plastics was demolded.

Not merely the molded product but also the matrix resin staying in the resin inlet 8 and the bleeding port 9 provided on the forming-molding tool 1 were cured so as to be easily demolded.

It was confirmed that the obtained molded product had no defects such as wrinkle and fiber meander and the carbon fiber volume fraction Vf of the molded product was within the intended 57.5 ± 2.5%. The carbon fiber volume fraction was measured on the basis of (4) matrix digestion method using sulfuric acid according to JIS K 7075 (2006).

### <Comparative Example 1 >

### (Forming-molding tool)

The same forming-molding tool as Example 1 was produced except for not providing the piping 4 and the piping 5 made of copper pipes, the thermally conductive material 6 and the heat insulator 10 made of glass wool.

### (Heating and cooling tests of forming-molding tool)

A thermocouple was mounted on the forming-molding tool in the same manner as Example 1 so as to monitor heating and cooling of the forming-molding tool with a data logger.

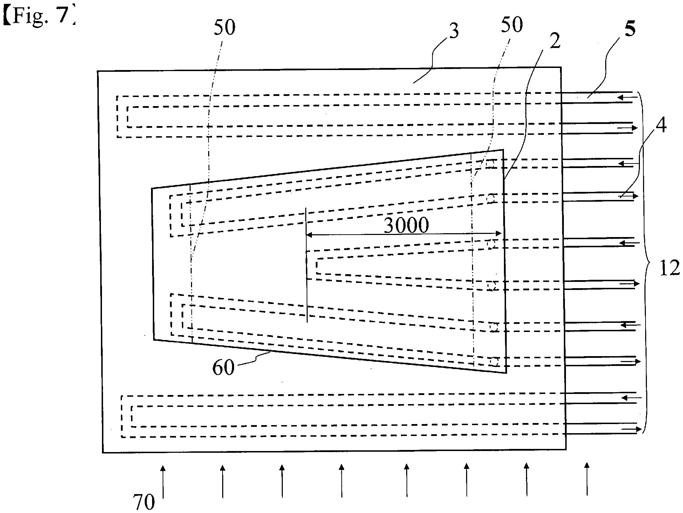

The forming-molding tool was put in a hot-air oven in this state and the oven was set at a temperature of 92°C. Here, the used hot-air oven was such that hot air 70 blew out in one direction perpendicular to the longer direction of the forming-molding tool to heat the inside of the oven, as shown in Fig. 7.

When the heating state of the forming-molding tool was confirmed after 90 minutes, the side board part 60 of the convex part against which the hot air blew was heated with a precision of 90 ± 5°C, but yet the spots except the part were less than 85°C; it was confirmed that the heating state varied with the position of the forming-molding tool.

Thus, the heating was continued until all spots were within a temperature of 90 ± 5°C, and it was 180 minutes after starting the heating of the hot-air oven when all of the spots were heated within the temperature range.

### <Comparative Example 2>

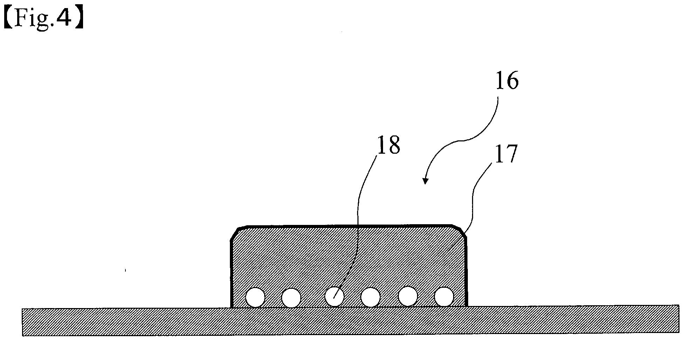

A solid convex part made of SUS304 was produced, which has the same external shape as the hollow convex part of the forming-molding mold used in Example 1. Subsequently, piping 18 for a flow path of a heating medium was disposed the bottom part of the convex part by 6 pipes in total by using the same copper pipes as used in Example 1, as shown in Fig. 4. The convex part 17 was welded and integrated with the flat plate part 3 to produce a forming-molding tool 16.

A thermocouple was mounted on this forming-molding tool in the same manner as Example 1 so as to monitor heating and cooling of the forming-molding tool with a data logger. In the same manner as Example 1, the piping 18 was connected to a heating medium line of the mold temperature controller and the preset temperature of the mold temperature controller was set at a temperature of 92°C to heat the forming-molding tool.

When the heating state of the forming-molding tool was confirmed after 90 minutes, it was confirmed that all spots were less than 90°C and temperature difference was 10°C or more, depending on the spot. Thereafter, the heating was continued and when the heating state was confirmed again at 180 minutes after starting the heating, all of the spots were less than 90°C.

## Claims

1. A process for producing a preform **characterized in that** the preform for vacuum assisted resin transfer molding is produced by using a forming-molding tool for vacuum assisted resin transfer molding of fiber reinforced plastics obtained by integrating a face plate part (2) and a flat plate part (3) for forming a hollow convex part, wherein a hole (11) is placed in a region of the flat plate part (3) which is surrounded by the face plate part (2) forming the hollow convex part, and in which metallic piping as a flow path of a heating medium (4) is integrated with the back surface of the face plate part (2) by a thermally conductive material (6) and a rubber cord (7) is integrated with an outside of a region used for forming or molding in the flat plate part (3), wherein
the thickness of the face plate part (2) is 1 mm or more and 15 mm or less, wherein the diameter of the rubber cord (7) is 10 mm or more and 100 mm or less, and wherein
a resin inlet (8) and a bleeding port of a matrix resin (9) for vacuum assisted resin transfer molding are placed in the flat plate part (3) between the convex part and the rubber cord (7)
through the following:
(A) placing step of placing on the forming-molding tool a laminate (13) of which reinforcing fiber fabrics having thermoplastic and/or thermosetting resin on their surface are laminated;
(B) forming step of forming the laminate by evacuating an inside of sealed space after the whole laminate (13) is covered with a transparent or translucent rubber sheet (14) to seal the forming-molding tool;
(B1) checking step of checking if the laminate (13) has a defect, such as wrinkle, or not through the rubber sheet while atmospheric pressure is kept applying to the laminate (13) by continuing evacuation; and
(C) heating and pressurizing step of bonding the reinforcing fiber fabrics through the thermoplastic and/or thermosetting resin on the surface of the reinforcing fiber fabrics by running a heating medium into the piping (4, 5) to heat and pressurize the laminate (13) after being formed.

2. The process for producing a preform according to claim 1, in which a subsidiary material as a flow path of a matrix resin in vacuum assisted resin transfer molding is placed together with the laminate (13) in the placing step (A).

3. The process for producing a preform according to claim 1 or 2, in which the rate of temperature rise of the forming-molding tool is 0.5°C/minute or more and 3°C/minute or less in a heating temperature range of 40°C or more and 130°C or less in the heating and pressurizing step (C).

4. A process for producing fiber reinforced plastics **characterized in that** the preform obtained by the process according to any one of claims 1 to 3 is placed in a molding tool different from the forming-molding tool to infuse, impregnate and cure a matrix resin.

5. A process for producing fiber reinforced plastics **characterized in that** vacuum assisted resin transfer molding is performed by using a forming-molding tool (1) for vacuum assisted resin transfer molding of fiber reinforced plastics obtained by integrating a face plate part (2) and a flat plate part (3) for forming a hollow convex part, wherein a hole (11) is placed in a region of the flat plate part (3) which is surrounded by the face plate part (2) forming the hollow convex part, and in which metallic piping as a flow path of a heating medium (4) is integrated with the back surface of the face plate part (2) by a thermally conductive material (6) and a rubber cord (7) is integrated with an outside of a region used for forming or molding in the flat plate part (3), wherein
the thickness of the face plate part (2) is 1 mm or more and 15 mm or less, wherein the diameter of the rubber cord (7) is 10 mm or more and 100 mm or less, and wherein
a resin inlet (8) and a bleeding port of a matrix resin (9) for vacuum assisted resin transfer molding are placed in the flat plate part (3) between the convex part and the rubber cord (7)
through the following:
(A) placing step of placing on the forming-molding tool resin distribution medium (20) and peel ply as a flow path of a matrix resin in vacuum assisted resin transfer molding together with a laminate (13) of which reinforcing fiber fabrics having thermoplastic and/or thermosetting resin on their surface are laminated;
(B) forming step of forming the laminate by evacuating an inside of sealed space after the whole laminate (13) is covered with a transparent or translucent rubber sheet (14) to seal the forming-molding tool;
(B1) checking step of checking if the laminate (13) has a defect, such as wrinkle, or not through the rubber sheet while atmospheric pressure is kept applying to the laminate (13) by continuing evacuation;
(C) heating and pressurizing step of bonding the reinforcing fiber fabrics through the thermoplastic and/or thermosetting resin on the surface of the reinforcing fiber fabrics by running a heating medium into a piping (18) to heat and pressurize the laminate (13) after being formed;
(D) bagging step of evacuating the inside of sealed space after the preform (19), the resin distribution medium (20) and the peel ply are covered with a bagging film (22) to seal the forming-molding tool while the sealing of the rubber sheet (14) is released and obtained preform (19), the resin distribution medium (20) and the peel ply are kept in the forming-molding tool without being demolded;
(E) resin infusing and impregnating step of infusing a matrix resin while evacuating the inside of the sealed space to impregnate the matrix resin into the preform (19) through the resin distribution medium (20);
(F) resin curing step of heating and curing the matrix resin by running a heating medium into the piping (18); and
(G) demolding step of demolding a molded product from the forming-molding tool (1).

6. The process for producing fiber reinforced plastics according to claim 5, in which a caul plate is placed on the resin distribution medium (20) and the peel ply in the bagging step (D) and thereafter the forming-molding tool (1) is sealed with a bagging film.

7. The process for producing fiber reinforced plastics according to claim 5 or 6, in which the rate of temperature rise of the forming-molding tool (1) is 0.5°C/minute or more and 3°C/minute or less in a heating temperature range of 40°C or more and 130°C or less in the heating and pressurizing step (C).

## Patentansprüche

1. Verfahren zum Herstellen einer Vorform, **dadurch gekennzeichnet, dass** die Vorform für ein vakuumunterstütztes Harzspritzpressen unter Verwendung eines auszubildenden Formwerkzeugs zum vakuumunterstützten Harzspritzpressen von faserverstärkten Kunststoffen auszubildend wird, die durch Anordnen eines Frontplattenteils (2) und eines ebenen Plattenteils (3) zum Formen eines hohlen konvexen Teils erhalten wird, wobei eine Öffnung (11) in einem Bereich des ebenen Plattenteils (3) angeordnet ist, der durch das Frontplattenteil (2) umgeben ist, das das hohle konvexe Teil bildet, und in dem eine metallische Rohrleitung als Fließweg eines Heizmediums (4) mit der Rückseite des Frontplattenteils (2) durch thermisch leitfähiges Material (6) verbunden ist und ein Gummiband (7) mit einer Außenseite eines Bereichs, der zum Formen oder Gießen im ebenen Plattenteil (3) verwendet wird, verbunden ist,
- wobei die Dicke des Frontplattenteils (2) 1 mm oder größer und 15 mm oder kleiner beträgt,
- wobei der Durchmesser des Gummibands (7) 10 mm oder größer und 100 mm oder kleiner ist, und
- wobei ein Harzeinlass (8) und ein Entlüftungsanschluss eines Matrixharzes (9) für ein vakuumunterstütztes Harzspritzpressen im ebenen Plattenteil (3) zwischen dem konvexen Teil und dem Gummiband (7) durch Folgendes angeordnet werden:
- (A) Anordnungsschritt zum Anordnen eines Laminats (13) auf dem auszubildenden Formwerkzeug, auf dem Faserverstärkungsstoffe mit thermoplastischem und/oder wärmehärtbarem Harz auf der Oberfläche laminiert werden;
- (B) Formungsschritt zum Formen des Laminats durch Entleeren eines Inneren eines abgedichteten Raums, nachdem das gesamte Laminat (13) mit einer durchsichtigen oder durchscheinenden Gummiunterlage (14) bedeckt ist, um das auszubildende Formwerkzeug abzudichten;
- (B1) Prüfschritt zum Prüfen, ob das Laminat (13) einen Mangel, zum Beispiel eine Falte, oder keine Gummiunterlage aufweist, während ein Atmosphärendruck durch fortwährende Entleerung ständig auf das Laminat (13) aufgebracht wird; und
- (C) Aufheiz- und Druckbeaufschlagungsschritt zum Verbinden der Faserverstärkungsstoffe durch das thermoplastische und/oder wärmehärtbare Harz auf der Oberfläche der Faserverstärkungsstoffe durch Einfließen eines Heizmediums in die Rohrleitung (4, 5), um das Laminat (13), nachdem es geformt ist, aufzuheizen und unter Druck zu setzen.

2. Verfahren zum Herstellen einer Vorform gemäß Anspruch 1, in dem ein Zusatzmaterial als Fließweg eines Matrixharzes beim vakuumunterstützten Harzspritzpressen zusammen mit dem Laminat (13) im Anordnungsschritt (A) angeordnet wird.

3. Verfahren zum Herstellen einer Vorform gemäß Anspruch 1 oder 2, in dem die Temperaturanstiegsrate des auszubildenden Formwerkzeugs 0,5 °C/min oder mehr und 3 °C/min oder weniger in einem Erwärmungstemperaturbereich von 40 °C oder größer und 130 °C oder kleiner im Aufheiz- und Druckbeaufschlagungsschritt (C) beträgt.

4. Verfahren zum Herstellen von faserverstärkten Kunststoffen, **dadurch gekennzeichnet, dass** die Vorform, die durch das Verfahren gemäß einem der Ansprüche 1 bis 3 erhalten wird, in einem Formwerkzeug, das sich vom auszubildenden Formwerkzeug unterscheidet, angeordnet ist, um ein Matrixharz einzufüllen, zu imprägnieren und auszuhärten.

5. Verfahren zum Herstellen von faserverstärkten Kunststoffen, **dadurch gekennzeichnet, dass** ein vakuumunterstütztes Harzspritzpressen unter Verwendung eines auszubildenden Formwerkzeugs (1) zum vakuumunterstützen Harzspritzpressen von faserverstärkten Kunststoffen, die durch Verbinden eines Frontplattenteils (2) und eines ebenen Plattenteils (3) zum Bilden eines hohlen konvexen Teils erhalten werden, ausgeführt wird, wobei eine Öffnung (11) in einem Bereich des ebenen Plattenteils (3) angeordnet ist, der durch das Frontplattenteil (2) umgeben ist, das den hohlen konvexen Teil bildet, und in dem eine metallische Rohrleitung als Fließweg eines Heizmediums (4) mit der Rückseite des Frontplattenteils (2) durch thermisch leitfähiges Material (6) verbunden ist und ein Gummiband (7) mit einer Außenseite eines Bereichs, der zum Formen oder Gießen im ebenen Plattenteil (3) verwendet wird, verbunden ist,
- wobei die Dicke des Frontplattenteils (2) 1 mm oder größer und 15 mm oder kleiner ist,
- wobei der Durchmesser der Gummibands (7) 10 mm oder größer und 100 mm oder kleiner ist, und
- wobei ein Harzeinlass (8) und ein Entlüftungsanschluss eines Matrixharzes (9) für ein vakuumunterstütztes Harzspritzpressen im ebenen Plattenteil (3) zwischen dem konvexen Teil und dem Gummiband (7) durch Folgendes angeordnet werden:
- (A) Anordnungsschritt zum Anordnen eines Harzverteilungsmediums (20) und einer Abziehschicht als Fließweg eines Matrixharzes auf dem auszubildenden Formwerkzeug beim vakuumunterstützten Harzspritzpressen zusammen mit einem Laminat (13), von denen Faserverstärkungsstoffe mit thermoplastischem und/oder wärmehärtbarem Harz auf der Oberfläche laminiert sind;
- (B) Formungsschritt zum Formen des Laminats durch Entleeren eines Inneren eines abgedichteten Raums, nachdem das gesamte Laminat (13) mit einer durchsichtigen oder durchscheinenden Gummiunterlage (14) bedeckt ist, um das auszubildende Formwerkzeug abzudichten;
- (B1) Prüfschritt zum Prüfen, ob das Laminat (13) einen Mangel, zum Beispiel eine Falte oder keine Gummiunterlage aufweist, während ein Atmosphärendruck durch fortwährende Entleerung ständig auf das Laminat (13) aufgebracht wird; und
- (C) Aufheiz- und Druckbeaufschlagungsschritt zum Verbinden der Faserverstärkungsstoffe durch das thermoplastische und/oder wärmehartbare Harz auf der Oberfläche der Faserverstärkungsstoffe durch Einfließen eines Heizmediums in die Rohrleitung (18), um das Laminat (13), nachdem es geformt ist, aufzuheizen und unter Druck zu setzen,
- (D) Schichtungsschritt zum Entleeren des Inneren eines abgedichteten Raums, nachdem die Vorform (19), das Harzverteilungsmedium (20) und die Abziehschicht mit einer Vakuumfolie (22) bedeckt sind, um das auszubildende Formwerkzeug abzudichten, während die Abdichtung der Gummiunterlage (14) gelöst wird und die erhaltene Vorform (19), das Harzverteilungsmedium (20) und die Abziehschicht im auszubildenden Formwerkzeug ohne Entformen beibehalten werden;
- (E) Harzeinfüll- und Imprägnierschritt zum Einfüllen eines Matrixharzes, während das Innere des abgedichteten Raums entleert wird, um das Matrixharz in der Vorform (19) durch das Harzverteilungsmedium (20) zu imprägnieren;
- (F) Harz-Aushärtschritt zum Aufheizen und Aushärten des Matrixharzes durch Einfüllen eines Heizmediums in die Rohrleitung (18); und
- (G) Entformungsschritt zum Entformen eines Spritzgussprodukts vom auszubildenden Formwerkzeug (1).

6. Verfahren zum Herstellen von faserverstärkten Kunststoffen gemäß Anspruch 5, in dem ein Pressblech auf dem Harzverteilungsmedium (20) und der Abziehschicht im Schichtungsschritt (D) angeordnet und danach das auszubildende Formwerkzeug (1) mit einer Vakuumfolie abgedichtet wird.

7. Verfahren zum Herstellen von faserverstärkten Kunststoffen gemäß Anspruch 5 oder 6, in dem die Temperaturanstiegsrate des auszubildenden Formwerkzeugs (1) 0,5 °C/min oder größer und 3 °C/min oder kleiner in einem Aufheiztemperaturbereich von 40 °C oder größer und 130 °C oder kleiner im Aufheiz- und Druckbeaufschlagungsschritt (C) ist.

## Revendications

1. Procédé de production d'une préforme **caractérisé en ce que** la préforme pour le moulage par transfert de résine sous vide est produite en utilisant un outil de formage-moulage pour le moulage par transfert de résine sous vide de matières plastiques renforcées par des fibres obtenues par intégration d'une partie de plaque avant (2) et d'une partie de plaque plate (3) pour former une partie convexe creuse, où un trou (11) est placé dans une région de la partie de plaque plate (3) qui est entourée par la partie de plaque avant (2) formant la partie convexe creuse, et où une tuyauterie métallique en tant que chemin d'écoulement d'un milieu de chauffage (4) est intégrée à la surface arrière de la partie de plaque avant (2) par un matériau thermoconducteur (6) et une corde en caoutchouc (7) est intégrée à une partie extérieure d'une région utilisée pour le formage ou le moulage dans la partie de plaque plate (3), où
l'épaisseur de la partie de plaque avant (2) est supérieure ou égale à 1 mm et inférieure ou égale à 15 mm, où
le diamètre de la corde en caoutchouc (7) est supérieur ou égal à 10 mm et inférieur ou égal à 100 mm, et où
une entrée de résine (8) et un orifice de purge d'une résine matricielle (9) pour le moulage par transfert de résine sous vide sont placés dans la partie de plaque plate (3) entre la partie convexe et la corde en caoutchouc (7)
par les étapes suivantes:
(A) une étape de mise en place qui consiste à mettre en place sur l'outil de formage-moulage un stratifié (13) dont les tissus en fibres de renforcement ayant une résine thermoplastique et/ou thermodurcissable sur leur surface sont stratifiés;
(B) une étape de formage qui consiste à former le stratifié par évacuation d'une partie intérieure d'un espace scellé après que le stratifié entier (13) est recouvert d'une feuille en caoutchouc transparente ou translucide (14) pour sceller l'outil de formage-moulage;
(B1) une étape de vérification qui consiste à vérifier si le stratifié (13) a un défaut, tel que le plissement, ou non à travers la feuille en caoutchouc tandis que la pression atmosphérique est maintenue appliquée au stratifié (13) en continuant l'évacuation; et
(C) une étape de chauffage et de mise sous pression qui consiste à lier les tissus en fibres de renforcement par la résine thermoplastique et/ou thermodurcissable sur la surface des tissus en fibres de renforcement en faisant passer un milieu de chauffage dans la tuyauterie (4, 5) pour chauffer et mettre sous pression le stratifié (13) après avoir été formé.

2. Procédé de production d'une préforme selon la revendication 1, dans lequel un matériau subsidiaire en tant que chemin d'écoulement d'une résine matricielle dans le moulage par transfert de résine sous vide est placé conjointement avec le stratifié (13) dans l'étape de mise en place (A).

3. Procédé de production d'une préforme selon la revendication 1 ou 2, dans lequel la vitesse de montée en température de l'outil de formage-moulage est supérieure ou égale à 0,5°C/minute et inférieure ou égale à 3°C/minute dans une plage de température de chauffage supérieure ou égale à 40°C et inférieure ou égale à 130°C dans l'étape de chauffage et de mise sous pression (C).

4. Procédé de production de matières plastiques renforcées par des fibres **caractérisé en ce que** la préforme obtenue par le procédé selon l'une quelconque des revendications 1 à 3 est placée dans un outil de moulage différent de l'outil de formage-moulage pour faire infuser, imprégner et faire durcir une résine matricielle.

5. Procédé de production de matières plastiques renforcées par des fibres **caractérisé en ce que** le moulage par transfert de résine sous vide est effectué en utilisant un outil de formage-moulage (1) pour le moulage par transfert de résine sous vide de matières plastiques renforcées par des fibres obtenues par intégration d'une partie de plaque avant (2) et d'une partie de plaque plate (3) pour former une partie convexe creuse, où un trou (11) est placé dans une région de la partie de plaque plate (3) qui est entourée par la partie de plaque avant (2) formant la partie convexe creuse, et où une tuyauterie métallique en tant que chemin d'écoulement d'un milieu de chauffage (4) est intégrée à la surface arrière de la partie de plaque avant (2) par un matériau thermoconducteur (6) et une corde en caoutchouc (7) est intégrée à un côté extérieur d'une région utilisée pour le formage ou le moulage dans la partie de plaque plate (3), où
l'épaisseur de la partie de plaque avant (2) est supérieure ou égale à 1 mm et inférieure ou égale à 15 mm, où
le diamètre de la corde en caoutchouc (7) est supérieur ou égal à 10 mm et inférieur ou égal à 100 mm, et où
une entrée de résine (8) et un orifice de purge d'une résine matricielle (9) pour le moulage par transfert de résine sous vide sont placés dans la partie de plaque plate (3) entre la partie convexe et la corde en caoutchouc (7)
par les étapes suivantes:
(A) une étape de mise en place qui consiste à mettre en place sur l'outil de formage-moulage un milieu de distribution de résine (20) et une couche pelable en tant que chemin d'écoulement d'une résine matricielle dans le moulage par transfert de résine sous vide conjointement avec un stratifié (13) dont des tissus en fibres de renforcement ayant une résine thermoplastique et/ou thermodurcissable sur leur surface sont stratifiés;
(B) une étape de formage qui consiste à former le stratifié par évacuation d'une partie intérieure d'un espace scellé après que le stratifié entier (13) est recouvert d'une feuille en caoutchouc transparente ou translucide (14) pour sceller l'outil de formage-moulage;
(B1) une étape de vérification qui consiste à vérifier si le stratifié (13) a un défaut, tel que le plissement, ou non à travers la feuille en caoutchouc tandis que la pression atmosphérique est maintenue appliquée au stratifié (13) en continuant l'évacuation;
(C) une étape de chauffage et de mise sous pression qui consiste à lier les tissus en fibres de renforcement par la résine thermoplastique et/ou thermodurcissable sur la surface des tissues en fibres de renforcement en faisant passer un milieu de chauffage dans une tuyauterie (18) pour chauffer et mettre sous pression le stratifié (13) après avoir été formé;
(D) une étape d'ensachage qui consiste à évacuer la partie intérieure de l'espace scellé après que la préforme (19), le milieu de distribution de résine (20) et la couche pelable sont recouverts d'un film d'ensachage (22) pour sceller l'outil de formage-moulage tandis que le scellage de la feuille en caoutchouc (14) est libéré, et la préforme obtenue (19), le milieu de distribution de résine (20) et la couche pelable sont maintenus dans l'outil de formage-moulage sans être démoulés;
(E) une étape d'imprégnation et d'infusion de résine qui consiste à faire infuser une résine matricielle tout en évacuant la partie intérieure de l'espace scellé pour imprégner la résine matricielle dans la préforme (19) à travers le milieu de distribution de résine (20);
(F) une étape de durcissement de résine qui consiste à chauffer et faire durcir la résine matricielle en faisant passer un milieu de chauffage dans la tuyauterie (18); et
(G) une étape de démoulage qui consiste à démouler un produit moulé de l'outil de formage-moulage (1).

6. Procédé de production de matières plastiques renforcées par des fibres selon la revendication 5, dans lequel une plaque de conformation est placée sur le milieu de distribution de résine (20) et la couche pelable dans l'étape d'ensachage (D) et ensuite l'outil de formage-moulage (1) est scellé avec un film d'ensachage.

7. Procédé de production de matières plastiques renforcées par des fibres selon la revendication 5 ou 6, dans lequel la vitesse de montée en température de l'outil de formage-moulage (1) est supérieure ou égale à 0,5°C/minute et inférieure ou égale à 3°C/minute dans une plage de température de chauffage supérieure ou égale à 40°C et inférieure ou égale à 130°C dans l'étape de chauffage et de mise sous pression (C).
